(19) Europäisches Patentamt
European Patent Office
Office européen des brevets

(11) **EP 2 069 070 B1**

(12) **EUROPEAN PATENT SPECIFICATION**

(45) Date of publication and mention
of the grant of the patent:
**27.11.2013  Bulletin 2013/48**

(51) Int Cl.:
***B01L 7/00*** *(2006.01)*      ***C12Q 1/68*** *(2006.01)*
***G01N 35/00*** *(2006.01)*

(21) Application number: **07805479.8**

(22) Date of filing: **27.09.2007**

(86) International application number:
**PCT/IE2007/000089**

(87) International publication number:
**WO 2008/038259 (03.04.2008 Gazette 2008/14)**

(54) **A QPCR ANALYSIS APPARATUS**

QPCR-ANALYSEGERÄT

APPAREIL D'ANALYSE PAR PCR QUANTITATIVE (QPCR)

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.09.2006  US 847684 P**

(43) Date of publication of application:
**17.06.2009  Bulletin 2009/25**

(73) Proprietor: **Stokes Bio Limited**
**Limerick (IE)**

(72) Inventors:
• **DAVIES, Mark**
 **Limerick (IE)**
• **DALY, John**
 **County Kerry (IE)**
• **DALTON, Tara**
 **County Limerick (IE)**

(74) Representative: **Wöhler, Christian**
**Life Technologies**
**Frankfurter Straße 129 B**
**64293 Darmstadt (DE)**

(56) References cited:
**US-A1- 2002 127 152      US-A1- 2002 168 299**
**US-A1- 2005 053 950**

**Description**

INTRODUCTION

Field of the Invention

The invention relates to analysis of chemical or biological samples in which they are thermally cycled for amplification.

Prior Art Discussion

The following documents set out the background to PCR analysis.

Braun, D., Goddard, N., Libchaber, A., 2003. Exponential DNA replication by laminar convection. Physical Review Letters 91, 1-4.

Hennig. M., Braun, D., 2005. Convective polymerase chain reaction around micro immersion heater. Applied Physics Letters 87.

Ugaz, V., Krishnan, M., October 2004. Novel convective flow based approach for high-throughput per thermocycling. JALA. Vol. 9, No.5.

Wheeler, E., Benett, W., Stratton, P., Richards, J., Chen, A., Christian, A., Ness, K., and L.G. Li, J. O., Weisgraber, T., Goodson. K., Milanovich, F., 2004. Convectively driven polymerase chain reaction thermal cycler. Analytical Chemistry 76, 4001-4016.

Yager, P., Edwards, T., Fun E., Helton, K., Nelson, K., Tam, M., Weigl. B., 27 July 2006. Microfluidic diagnostic technologies for global public health. Nature 442, 412 - 418.

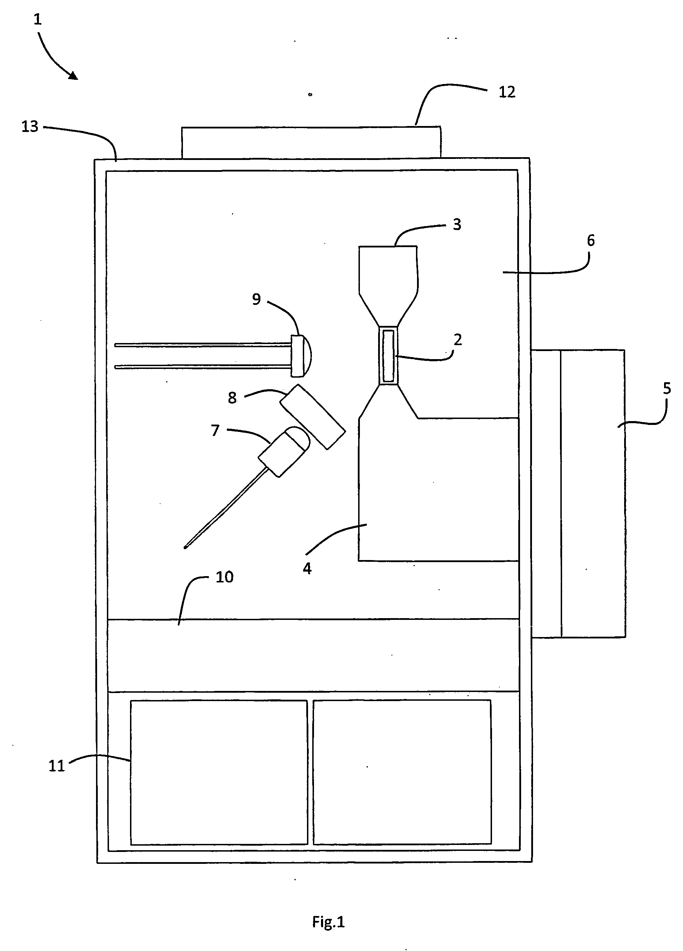

US6586233 (University of California) describes an arrangement for convectively-driven thermal cycling to perform a polymerase chain reaction (PCR). As viewed in its Fig. 1 there is a left side upper temperature zone 13, and a right side lower temperature zone in a closed-loop path for a sample. It is stated that such an apparatus is suitable for battery-powered field use as relatively little power is required. The heater is in one embodiment a thin film platinum heater.

US2006/0216725 (Lee et al)describes an apparatus having *inter alia* the objective of overcoming perceived problems in the approach of US6586233 arising because sufficient natural convection would not be obtained. In the approach of US2006/0216725 Marangoni convention is used, relying on surface tension convection.

US5994056 describes an approach to PCR in which there is simultaneous amplification and detection, to enhance speed and accuracy. This is often referred to as quantitative PCR or "q PCR".

In general, heretofore, when qPCR is performed there is one reading per cycle as the sample undergoes amplification. For example, if the samples are in fixed positions in assay cells which are heated and cooled through temperature cycles, there will be a fluorescence emission reading taken for each temperature cycle.

The invention is directed towards providing improved thermal cycling with convection.

SUMMARY OF THE INVENTION

The invention provides an analysis apparatus comprising a cell for containing a sample, and a temperature controller for causing a temperature differential across the cell to cause free convection cycling of the sample as claimed in claim 1. A detector detects radiation emission from the sample. A processor analyses in real time a sample in the cell as it cycles due to free convection caused by the temperature differential to generate analysis results. The cell and the temperature controller may be configured for nucleic acid amplification.

Because of the real time monitoring a considerable amount of analysis data is generated despite the fact that the sample is not routed through physically separate zones for cycling or is not static in an assay cell with temperature cycling in a clearly-defined control scheme. Thus the invention achieves in the one apparatus a very large amount of data for PCR, thus giving very accurate S-curves, and also a very simple and compact architecture, requiring in one embodiment only one cell for containing a sample and temperature controller. The apparatus therefore lends itself to a hand-held portable arrangement, with a low power consumption. Indeed in one embodiment, there is no need for heating or cooling on one side of the cell, a passive heat sink maintaining one side of the cell at the required temperature.

In one embodiment, the apparatus further comprises a radiation source for illuminating a sample, and the radiation source may be an LED, such as a blue LED, and may comprise a narrow pass filter or a notch filter.

Preferably, the detector comprises a filter for blocking unwanted wavelengths.

Preferably, the cell defines a single open space without internal walls.

In one embodiment the temperature controller comprises a heater in contact with one wall of the cell, and a heat sink in contact with another cell wall. Preferably, the heat sink has size and thermal conductivity characteristics to passively maintain the associated cell wall at a target temperature.

In one embodiment, the processor samples at a rate chosen according to desired frequency of points on an S-curve representing change of sample emission with time.

In one embodiment, the detector is a charge coupled device camera, and the processor is incorporated in the camera. Preferably, the capture rate is in the range of 0.125Hz to 10Hz.

In one embodiment, the processor post-processes from the time domain to the cycle domain to provide an S-curve representing change of sample emission with thermal cycle.

In one embodiment, said post-processing assumes average fluid properties; a constant reaction efficiency, and an average velocity for effective path lengths in the cell.

In one embodiment, the post-processing comprises executing a geometric progression dilution series, in which for a known concentration difference and efficiency of reaction the cycle number difference in crossing a threshold is determined.

In one embodiment, the post-processing comprises estimating a cycle time according to:

$$\tau = \frac{Log(E+1)}{Slope}$$

where $\tau$ is the cycle time, $E$ is the efficiency of the reaction, *Slope* is the slope of the log-linear portion of the free convection qPCR data.

In one embodiment, the apparatus comprises a plurality of cells, a common heater for heating a wall of a plurality of cells, and a common heat sink in contact with walls of a plurality of cells.

In one embodiment, the detector is mounted to capture sample emission from a window including only a portion of the cell space. Preferably, said window is adjacent a cold side of the cell.

In another aspect, the invention provides method of performing quantitative nucleic amplification, the method comprising the steps of loading a sample into a cell of an apparatus of any preceding claim, controlling the temperature controller to cause nucleic amplification with free convection in the cell, and sampling emission of the sample at multiple points in real time at a sampling rate.

In one embodiment, the processor post-processes the reading to provide an output indicating change of sample emission with thermal cycle.

In one embodiment, a hydrophobic liquid is placed over the sample to prevent contamination of the sample.

In one embodiment, the sample is in an emulsion.

In one embodiment, the method comprises the steps of increasing cell temperature in a controlled manner, monitoring emission of the sample, and processing data derived from the monitored emission to determine the time at which the DNA melts, and hence specificity of the amplified sample..

## DETAILED DESCRIPTION OF THE INVENTION

### Brief Description of the Drawings

The invention will be more clearly understood from the following description of some embodiments thereof, given by way of example only with reference to the accompanying drawings in which:-

Fig. 1 is a diagrammatic representation of an apparatus according to the invention for the amplification of DNA for quantitative measurements, in plan view with gravity acting normal to plane of the drawing;

Fig. 2 is a side view showing the outside of the apparatus of Fig. 1;

Fig. 3 is a perspective view of a portion of the apparatus of Fig. 1;

Fig. 4 is an 'S' curve generated from the apparatus of Fig. 1;

Fig. 5 shows serial dilution curves generated from the apparatus of Fig. 1; and

Fig. 6 is a perspective view of an alternative apparatus;

Description of the Embodiments

Structure of Apparatus

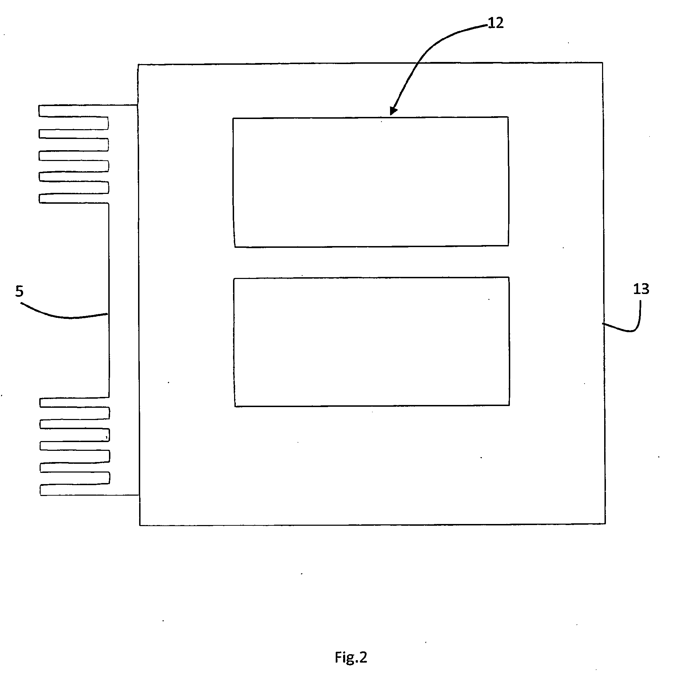

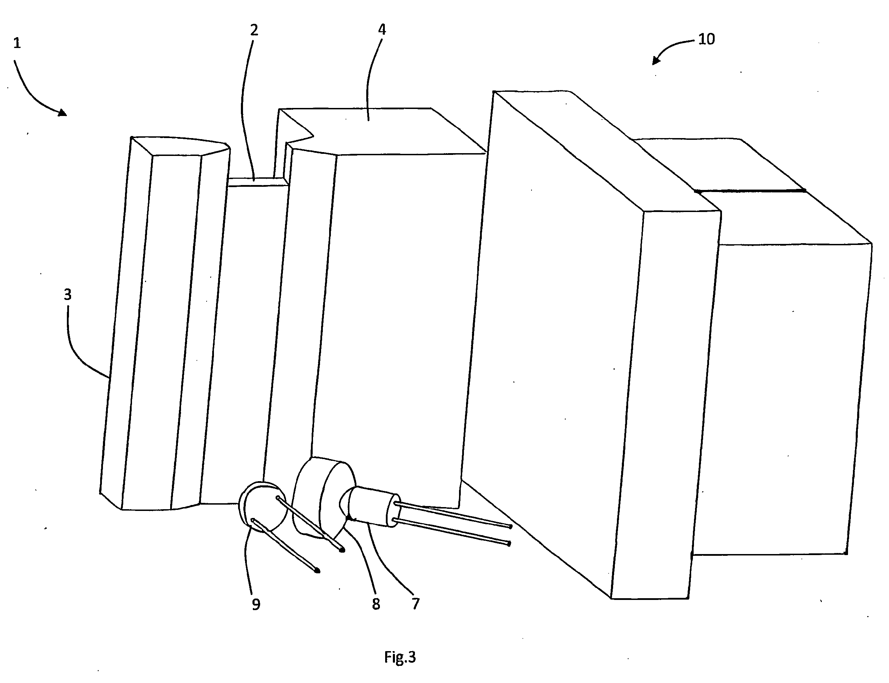

Referring to Figs. 1 to 3 there is illustrated an apparatus 1 for DNA amplification with quantitative measurement. A biological sample is held in a cell 2 for the amplification. The cell comprises a glass vial with internal dimensions of 10mm in width, 1mm in depth, and 48mm in height.

The cell 2 defines a single space within which the sample rotates. On one side a copper heater 3 is located to supply heat to the cell 2, and on the other side there is a cooling copper block 4 withdrawing heat from the cell. The location of both 3 and 4 generate a natural convection loop internally within the cell 2 without need for active cooling - the block 4 passively cooling by withdrawing heat from the direction of the heater 3.

Fig. 1 shows a mounting block 6 supporting the glass cell 2, the heater 3, the passive cooler block 4, an LED 7, a blue narrow pass filter 8, and a photodiode 9. The mounting block 6 thermally insulates the system, as well as removing any stray light from affecting the photodiode.

The temperature of the blocks is controlled using thermocouples connected to a controller 10, enabling a steady state gradient to occur across the cell. Both the hot and cold block temperatures are supplied to a monitor 12 located on outside packaging 13. The controller 10 also includes amplification circuits for processing signals from the photodiode 9.

The withdrawn heat from the cell 2 is removed to the surrounding ambient air through a heat sink 5. This has been found to be sufficient for a range of ambient room temperatures between 18°C and 26°C.

The LED 7 is a continuous blue LED light source (industrial standard T-1¾) packaged within clear, non diffused optics (Agilent Technologies). The filter 8 is a 470nm narrow band-pass filter (Edmund Optics), and. the LED 7 is placed at a 45° angle from the front surface of the sample cell 2 to minimise reflection of the excitation light into the detector, while maintaining a full field illumination, in this example.

The detector 9 is packaged in an infrared rejection filter to reduce noise from thermal aspects of the cavity. The detector 9 is an internally biased high-speed photodetector (Thorlabs). The analogue output from the detector 9 is fed into low noise circuitry which interprets and logs the detector signal for a determined integration time. The integration time is the time period over which the intensity of the emission signal is determined. The integration time in one embodiment is one second.

Use of Apparatus

In use, a sample volume is 25$\mu$l resulting in a 2.5mm sample height, and hence only the bottom part of the cell 2 is used. As the amplification proceeds an LED 7 emits a broad wavelength blue light centered about 472nm. This light is passed through the blue narrow pass filter 8 centered on 488nm. This considerably reduces the light intensity, however it reduces the presence of all other wavelengths which can produce erroneous data. The light is passed to the sample where SYBR green dye present in the biological sample absorbs the photons of blue light and emits photons of green light in the presence of double stranded DNA structures. The emitted light, along with some reflected excitation light which remains constant for the duration of the procedure, is detected by the photodiode 9.

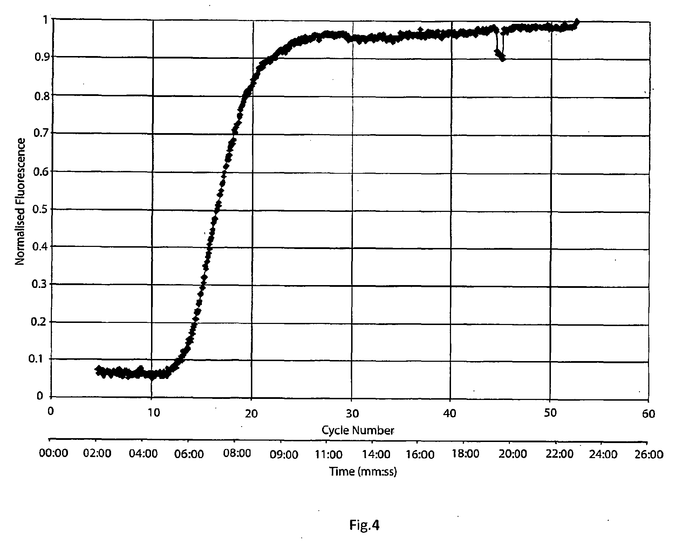

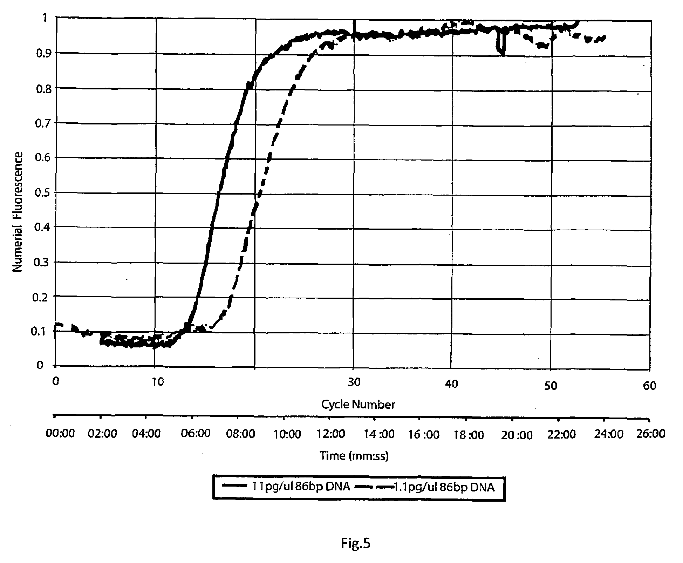

The signal from the photodiode is passed to the electronic amplification system 10, and the output signal is supplied to the monitor 12. With time, the level of emitted light increases and referring in particular to Fig. 4 an 'S' curve is generated, derived from many measurement points as the readings are taken in real time. Fig. 4 also shows cycle numbers on the horizontal axis, derived from the time-based readings. Referring to Fig. 5 a series of dilution experiments is performed. The sample volumes are again 25$\mu$l. The temperatures for the hot and cold block respectively were 120°C and 36°C. A constant light source filtered to 488nm was used to excite, and a 520nm high pass filter was placed inline of the CCD chip for the emission fluorescent detection. Displayed are two 'S' curves, one sample a 10-fold dilution of the other. The distance between the two 'S' curves for a given fluorescence value, assuming 100% efficiency for both reactions, gives a cycle difference of 3.32. This results in an effective cycle time of approximately 28 seconds. Total amplification occurs in approximately 15 minutes.

The approach taken is to thermally cycle the sample by having it rotate in a small volume cell heated from one side, whilst keeping the cell walls isothermal. The rotation of the biological sample is caused by the natural convection force induced within the cell, due to the temperature and density gradients imposed across the cell. Avoidance of active cooling leads to low power consumption.

With multiple measurements relative gene expression can be measured to distinguish different sub-types of a disease. The apparatus can distinguish between the AML and ALL sub-types of childhood leukaemia by measuring the relative gene expression of two genes that have been previously shown to be sufficient bio-markers for this diagnosis. This invention has the potential for use in relative viral loading, for example in the case of progressive HIV treatment, can be measured by finding the dilution of HIV in a given blood sample and then to show how this varies with time.

A heater may be connected on to the cooling block, and on completion of the amplification a nucleic acid melt-curve analysis is performed. This analysis is used with non-specific dyes that activate with any other double standard DNA molecules. The nucleic acid melt-curve can be performed through the heating of both blocks at a set ramp rate maintaining an isothermal cell between them. Through post-processing of the fluorescence values for given temperatures, the specificity of the product can be determined.

In another embodiment, following the nucleic acid amplification, the cool block temperature is increased in a controlled manner and the fluorescence is monitored. The resulting data is fluorescence recorded in a time domain. This is then processed to determine the time at which the products melt, determining specificity of the amplified product.

The natural convection cell consists of one thermal gradient. However with the convection of the fluid, in one complete flow cycle two temperature gradients exist, one being the higher spatial region, the transition from hot fluid to cooler fluid, and the second lower spatial region that of the transition from cooler fluid to hot fluid. By super-imposing a temperature plot on the fluorescence levels, two nucleic acid melt-curves can be generated; one for heating; and one for cooling. Specificity of product can be monitored in real-time through the analysis of the nucleic acid melt-curves.

In current thermal cyclers a discrete point is obtained for each thermal cycle of the PCR sample. This leads to a limited number of points in the log-linear phase of the qPCR data plot. Generally this corresponds to between 3 and 6 points for general thermal cyclers. Commercial thermal cycler systems perform smoothing and approximations on these limited number of points.

The free convection qPCR data generated as seen in Fig. 4 contains a significant increase in points for the log-linear phase of the amplification process, increasing accuracy and reducing the need for data smoothing operations. The log linear phase is between the time values of 5:00 (mins:secs) and 7:30 (mins:secs) or cycle number values of 11.5 to 7.3 cycles, on the horizontal axis. The data generated is limited only by the signal capture of the detector.

Size and Power Consumption

The apparatus 1 of Figs. 1 to 3 may be modified to provide a low-cost, battery-powered system that can be used to quantify the presence of a limited number of targets without the support of a scientific laboratory. This is because the cell may be much lower in height and there is no need for active cooling, and the illumination and detection are performed by parts which are physically small and have low power consumption. The apparatus has applications in the field for gene-expression measurement as a diagnostic tool or a screening tool for a disease; the identification of pathogens; the measurement of relative viral loading; the detection of virus and bacterial hostility; and in, for example, acts of bio-terrorism.

In the above embodiment the cell is fabricated from glass, and has the internal dimensions of a cavity of 10mm in width and 1mm in depth. The wall thickness is preferably of dimension approximately 1mm. The biological sample height determines the characteristics of the natural convection because the temperatures are determined by the amplification chemistry. An effective reaction height used within the cavity of the cell is 2.5mm corresponding to 25µl, a typical reaction volume used in molecular laboratories.

In another embodiment, the cell is fabricated from another biocompatible material, for example, polymethyl methacrylate (PMMA), polyurethane, polycarbonate, polystyrene. These materials can be used in either a rigid form as outlined with the glass cell, or, as a liner for insertion into a rigid cell.

The more tests that can potentially be completed the more complex and instructive are the resulting data. Multiple tests in the same container can be achieved in the invention by either simply repeating the test with different set of primers; multiplexing; or by stacking up a series of samples one on top of the other, to generate multiple 'S' curves simultaneously.

Very small sample volumes may be handled through the use of an emulsion based natural convection cell. The samples are emulsified in a biocompatible fluid, such as silicon oil, using surfactants to ensure a stable emulsion is formed. And then the solution is placed in the convection cell to be thermally cycled.

In another embodiment, small volume samples are added to a biocompatible fluid to be convected around internally in a biocompatible fluid. The sample locations are tracked and fluorescence level of each is monitored individually.

Contamination Avoidance

A great concern in PCR devices is contamination and carryover. The present invention performs the amplification in a glass cell, which is placed through a Sigma Coat protocol or the addition of surface tension and blocking reagents (Bovine Serum Albumin (BSA), Span 80, Tween 80, Triton X-100); loaded with the necessary reagents; topped with oil; thermally cycled; and then discarded or recycled through a cleaning procedure at the end of each test. A layer of oil is placed on top of the sample mixture to prevent evaporation and contamination of the sample. Laboratory grade mineral oil is used. By this means the cost of disposals is very small. Cells may also be sealed, or partially sealed with a solid plug. Also, because the sample is not rotating in a "race track" with an inner wall the problem of contamination caused by nucleation on the inner wall surface is avoided. The sample cycles by free convection in its own volume, namely the cavity within the cell 2.

In one example of use of the apparatus 1 a sample of 25µl volume is added to a silanised borosilicate glass vial of internal dimensions 1mm X 10mm X 48mm. The pre-treatment step of silanising the glass uses a hydrophobic surface coating to reduce interaction between the sample and glass walls. The wall thickness of the vial is 1mm. The vial is initially placed in a set of copper blocks set to 50°C to allow the AmpErase Uracil N-glycosylase (UNG) to perform at its optimal temperature for 2 minutes. The vial and sample following this is positioned in a set of copper blocks at 95°C for 10 minutes to allow for the bleaching of the UNG enzyme, the activation of the Roche enzyme and the denaturation of the double stranded product. Following this the glass vial is positioned within the two copper blocks along a holding groove machined into each of the copper blocks. These copper blocks, are set to 125°C and 50°C respectively. The copper blocks are heated in this embodiment using power heaters and are controlled by PID controllers (Eurotherm) with a feedback loop from a K-Type thermocouple embedded in each copper block.

Use of CCD Camera

In another embodiment the optical detection is performed using a Charged Couple Device (CCD). Fluorescent images are recorded of the cell from the start of the amplification process. Preferably, the capture rate for the CCD to perform real time detection lies in the range of 0.125Hz to 10Hz, and is ideally approximately 0.5Hz. The captured images are post-processed based on fluorescence allowing for the measurement of the amplification of DNA in a cycle. The 'S' curve produced shows at one end the threshold of detectability and at the other the gradual reduction of available reagents. The log-linear part of the curve is traditionally used for quantification.

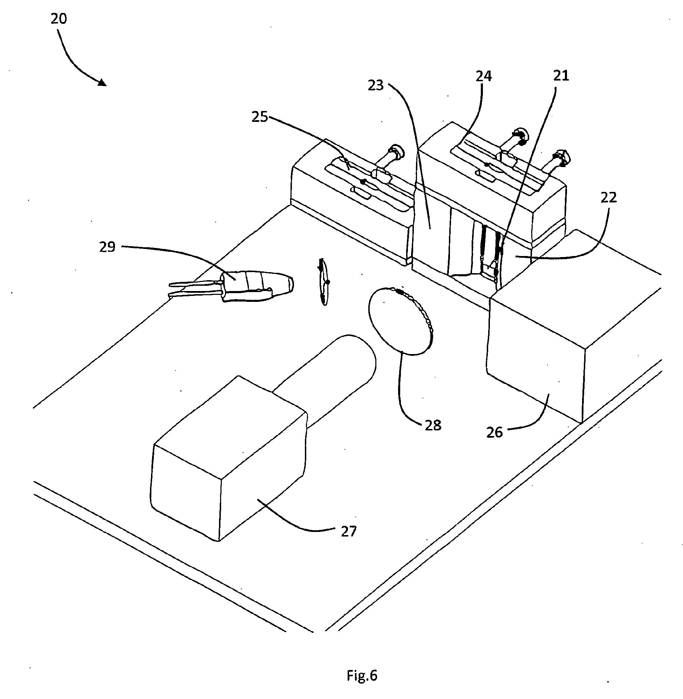

Referring to Fig. 6 an apparatus 20 comprises a cell 21, a heater 22, a passive copper heat sink 23 at a cold side of the cell 21, a temperature controller 24, a pre-heat unit 25, electronic circuits 26, a CCD camera 27, an emission filter 28, a UV white light source 29, and an excitation filter. The light filter allows through 470nm, the CCD camera is a DMK31AF03 camera, and the filter 28 is a 495nm long pass filter.

As for the examples illustrated in Figs. 4 and 5, the time-based readings are transformed to cycle values in the horizontal axis. Where the detector is a CCD camera it is particularly simple to set the sample frequency, as it is an inherent part of the functionality of commercially-available CCD cameras.

Apparatus' of the invention produce fluorescence data in real time, limited only by the acquisition rate available. This differs from other nucleic acid amplification systems because in the invention a portion of the cell is always at a constant temperature where continuous fluorescent measurements can be taken. In other nucleic acid amplification systems the whole sample is cycled and only when the sample returns to a specified temperature can the fluorescent measurements be taken, resulting in one measurement per cycle. The resulting increase in measurement resolution achieved by the invention gives better accuracy in the data analysis.

Time to cycle number conversion

In more detail, prior thermal cycling apparatus generate data in the cycle number domain - the number of repetitions of the thermal profile the sample has undergone - while the apparatus of the invention generates data in the time domain. Advantageously, the apparatus of the invention accurately converts the time domain to the cycle domain to ensure harmonious integration of the technology into existing biological protocols.

As a first approximation to generate a cycle number, average fluid properties and a constant efficiency of the reaction are assumed. The average velocity for estimated effective path lengths can be used to calculate an effective cycle time. This method does not take into account reaction kinetics, diffusion or streamline variations in efficiency.

Another method to approximate a conversion factor from cycle time to cycle number is by direct comparison of the fluorescent time-based free convection qPCR data with fluorescence cycle number based data from a commercial thermal cycler, for identical chemistry samples. Constant efficiencies between the two systems and the respective reactions are assumed.

Another method for generating a cycle time is through a geometric progression dilution series. For a known concentration difference and efficiency of the reactions the cycle number difference in crossing threshold can be determined. For example, using a serial dilution of 10-fold, the distance on the crossing threshold between two consecutive samples for an efficiency of 100%, a 3.32 cycle number difference results. This allows the free convection time based qPCR data to be converted from the time domain to a cycle number, generating the typical 'S-curve'. A standard analysis can then be performed on the on the data to derive the relative quantity of target DNA initially present in the sample.

A particularly accurate method for determining the time to doubling of the reaction mixture is by analysing the log linear portion of the fluorescence data. This portion of the data represents amplification with a constant efficiency. Using a linear regression analysis on the log-linear region of the free convection qPCR data of measured fluorescence against time, the intercept and slope can be calculated. For a given efficiency the cycle time can be calculated using:

$$\tau = \frac{Log(E+1)}{Slope} \qquad\qquad (\text{Eqn.1})$$

where $\tau$ is the cycle time, E is the efficiency of the reaction, *Slope* is the slope of the log-linear portion of the free convection qPCR data. For a doubling of the product, an efficiency of 1, the cycle time for each individual reaction can be determined.

The apparatus as used for a diagnostic tool with relative quantitative analysis would not necessarily require the previous step to be performed. The relative quantitative method uses the $\Delta C_t$ value, a value of the differences in cycle numbers for a particular crossing threshold for a set of genes. However not only is the $\Delta C_t$ value a diagnostic tool but the order in which the genes appear in the amplification can be used too. It is firstly this order that is intended to be used for the diagnosis in this invention. However it is believed that the crossing threshold data will also be of great benefit.

Sampling Window

A fluorescent gradient is present across the free convection qPCR sample, resulting from both the reduced presence of double stranded DNA in the high temperature region - denaturation region of the cavity - and the thermal effect on the fluorescent dye - reducing fluorescence with increasing temperature.

Monitoring of the reaction can be undertaken by integrating the whole sample region or by individually monitoring smaller regions of the overall sample volume. The only exception is that of the denaturation region for particular fluorescent dyes and probes, due to the reduced presence of binding sites as a result of the denaturation of the double stranded DNA. The ideal region of integration is the extension, and annealing region due to the lower thermal effects on the fluorescence and the increased presence of binding sites on the double stranded molecules. For a quencher probe (TaqMan) method the viewing area is less affected as the fluorescent molecules are released with amplification, thereby limiting the effect of the denaturation region to thermal effects on the probes fluorescence.

The cold (annealing) zone reports the highest fluorescence values and greatest overall increase in fluorescence for the amplification. The central (extension) region reports above average fluorescence showing an increase in the double-stranded concentration. The hot (denaturation) zone reports the lowest fluorescence due to the reduced binding site for the fluorescence dye. While qPCR can use the full field of view to determine the fluorescence increase, it is preferable to use an approximate 20% selection of the full sample volume. This interrogation region is preferably positioned at the cooler (annealing) side of the field of view.

Advantages of the Invention

For natural convection the sample does not have a clearly defined cyclic property and hence a clearly defined fluorescence region of interest is not apparent as in other PCR systems. We have achieved effective qPCR by monitoring in real time and transforming to cycle numbers, as shown in Figs. 4 and 5.

The benefit of achieving quantitative Polymerase Chain Reactions (qPCR) with free convection include: the determination of starting copy numbers; relative gene expression levels; and greater confidence in the endpoint fluorescence signal. Also melting curve analysis of non-specific binding fluorophores is a faster method of determining the product generated within an amplification process than that of an electrophoretic gel.

Achieving qPCR with natural convection cycling is a very significant advance. In standard qPCR devices there are well defined thermal geometric profiles leading to optical monitoring of the amplification process.

The following summarises some features and advantages which the apparatus provides in various embodiments embodiments:

- quantification analysis in real time resulting in increased measurement data,
- quantification analysis in real time with data conversion to current cycle number analysis,
- use with different fluorescent detection based dyes,
- portability (handheld),
- use of low cost optics,
- multiplex operations,
- performance of nucleic acid melt-curves, advantageously with CCD technology,
- initial denaturation followed by quantification amplification,
- performance of multi-operations at once, initial denaturation, amplification and nucleic acid melt-curve analysis,

- ability to be stacked to perform multiple amplifications in parallel,
- multi real-time amplifications with multi optics, possible with a single heater, possibly with a carousel based single optics system, and possibly with a carousel-based sample container delivery system for a single optics system,
- a variable positioned cool block to control the annealing temperature,
- a variable positioned cool block to control the annealing temperature for variations in ambient temperature,
- a control feed back system for the heater referenced from the annealing temperature of the cold block,
- amplification on a range of sub-micro litre volumes, droplets, suspended/emulsified in solution,
- reduced physical volume with the presence of a biocompatible material, while maintaining the overall convection characteristics of height and width,
- ability to distinguish between AML and ALL childhood leukaemia subtypes by measuring the differential amplification of two genes.

<u>Alternative Embodiments</u>

It has been shown that a natural convection cell can be used to give the target minimum temperatures in the PCR cycle without the need for active cooling of the wall opposite the heated one. In terms of the required heat transfer design this essentially requires that only one wall needs heating. A simple heater and thermal spreader are used to obtain an isothermal wall. A simple control loop feedback system is employed to maintain a steady state temperature for the hot wall of the reaction vessel. Preferably the temperature lies in the range of 50°C to 130°C, and is ideally approximately 95°C.

In one embodiment a central portion of the thermal spreader is removed, allowing for a cell to be placed here in an isothermal hot area prior to amplification. This is to perform the initial denaturation of the biological sample required by some biological protocols.

There may be a thermally-controlled cooling block for varying ambient temperatures. This may be achieved by introducing a small heater; a fan; and a heatsink arrangement to the block. For a drop in ambient temperature the heater will compensate and for rises in ambient temperature the fan will increase the heat transfer rate from the heatsink arrangement connecting the block. This can be controlled through a simple control loop feedback system to maintain a steady state temperature. Preferably, the temperature lies in the range of 20°C to 80°C, and is ideally approximately 55°C.

There may be a variable distance heatsink from the cooling block to control the heat transfer from the cooling block to its surroundings and thereby control the temperature of the block for variations in ambient temperature and also for variations in annealing temperature.

There may be a control loop feedback system to control the heater positioned in the hot block by a temperature referenced from the cold block. A smaller temperature variation in the cold wall of the cell is important to improve the efficiency of the reaction, the potential larger temperature variation in hot wall of the cell has a smaller effect on the efficiency.

There may be an arrangement of sample containers around a single central heater with individual optics for each sample container.

There may be sample containers packed around a central heater and a carousel system moving the relevant sample containers to the optical stage. In another embodiment the carousel system moves the optic stage to the relevant sample container.

In another embodiment there is a test platform consisting of the current laboratory standard of 96 or 384 wells, using natural convection in each well for nucleic acid amplification, with real time amplification detection.

There may be rows of cells placed between hot and cold blocks in the block order of cold, hot, cold, hot, thereby minimising space and thermal blocks numbers. The effect of this is to have a reverse direction natural convection induced in every second cell, but has no effect on the nucleic acid amplification.

In one embodiment the qPCR reaction area is capped, preserving a constant shape for the free convection reaction.

In another embodiment, sample preparation is undertaken prior to qPCR within the vial.

In another embodiment, sample preparation, for example, surface functionalisation, is undertaken in a separately positioned cavity to the qPCR reaction cavity.

Also, the apparatus may comprise a series of isothermal copper blocks with heaters for pre-treatment of a sample or post-amplification treatment of a sample. There may be coolers or heaters for stable storage of samples and reagents.

**Claims**

1. An analysis apparatus (1) comprising:

a cell (2) for containing a sample, the cell (2) defining a single open space without internal walls.
a temperature controller (3, 4, 10) for causing a temperature differential across the cell to cause free convection cycling of a sample without rotating the sample in a track with internal walls due to the temperature differential, a detector (9, 10) for detecting radiation emission from a sample, and
a processor (10) for analysing in real time a sample in the cell as it cycles due to free convection caused by the temperature differential, and for generating analysis results.

2. An analysis apparatus as claimed in claim 1, wherein the cell (2) and the temperature controller (10) are configured for nucleic acid amplification.

3. An analysis apparatus as claimed in claims 1 or 2, wherein the apparatus (1) is hand-held, having a battery power supply.

4. An analysis apparatus as claimed in any preceding claim, further comprising a radiation source (7, 8) for illuminating a sample.

5. An analysis apparatus as claimed in claim 4, wherein the radiation source is an LED (7), such as a blue LED.

6. An analysis apparatus as claimed in either of claims 4 or 5, wherein the radiation source further comprises a narrow pass filter (8) or a notch filter.

7. An analysis apparatus as claimed in any preceding claim, wherein the detector comprises a filter for blocking unwanted wavelengths.

8. An analysis apparatus as claimed in any preceding claim, wherein the temperature controller comprises a heater (3) in contact with one wall of the cell, and a heat sink (4) in contact with another cell wall.

9. An analysis apparatus as claimed in claim 8, wherein the heat sink (4) has size and thermal conductivity characteristics to passively maintain the associated cell wall at a target temperature.

10. An analysis apparatus as claimed in any preceding claim, wherein the processor (10) samples at a rate chosen according to desired frequency of points on an S-curve representing change of sample emission with time.

11. An analysis apparatus as claimed in claim 10, wherein the detector is a charge coupled device camera (27), and the processor is incorporated in the camera.

12. An analysis apparatus as claimed in claim 11, wherein the capture rate is in the range of 0.125Hz to 10Hz.

13. An analysis apparatus as claimed in any preceding claim, wherein the processor post-processes from the time domain to the cycle domain to provide an S-curve representing change of sample emission with thermal cycle.

14. An analysis apparatus as claimed in claim 13, wherein said post-processing assumes average fluid properties; a constant reaction efficiency, and an average velocity for effective path lengths in the cell.

15. An analysis apparatus as claimed in either of claims 13 or 14, wherein the post-processing comprises executing a geometric progression dilution series, in which for a known concentration difference and efficiency of reaction the cycle number difference in crossing a threshold is determined.

16. An analysis apparatus as claimed in any of claims 13 to 15, wherein the post-processing comprises estimating a cycle time according to:

$$\tau = \frac{Log(E+1)}{Slope}$$

where $\tau$ is the cycle time, $E$ is the efficiency of the reaction, *Slope* is the slope of the log-linear portion of the free convection qPCR data.

17. An analysis apparatus as claimed in any of claims 13 to 15, comprising a plurality of cells, a common heater for heating a wall of a plurality of cells, and a common heat sink in contact with walls of a plurality of cells.

18. An analysis apparatus as claimed in any preceding claim, wherein the detector is mounted to capture sample emission from a window including only a portion of the cell space.

19. An analysis apparatus as claimed in claim 18, wherein said window is adjacent a cold side of the cell.

20. A method of performing quantitative nucleic amplification, the method comprising the steps of loading a sample into a cell (2) of an apparatus of any preceding claim, controlling the temperature controller (3) to cause nucleic amplification with free convection in the cell, and sampling emission of the sample at multiple points in real time at a sampling rate.

21. A method as claimed in claim 20, wherein the processor (10) post-processes the reading to provide an output indicating change of sample emission with thermal cycle.

22. A method as claimed in either of claims 20 to 21, wherein a hydrophobic liquid is placed over the sample to prevent contamination of the sample.

23. A method as claimed in any of claims 20 to 22, wherein the sample is in an emulsion.

24. A method as claimed in any of claims 20 to 23, comprising the step of increasing cell temperature in a controlled manner, monitoring emission of the sample, and processing data derived from the monitored emission to determine the time at which the DNA melts, and hence specificity of the amplified sample.

**Patentansprüche**

1. Analysegerät (1), umfassend:

   eine Zelle (2), um eine Probe zu enthalten, wobei die Zelle (2) einen einzelnen offenen Raum ohne Innenwände definiert,
   eine Temperatursteuervorrichtung (3, 4, 10), um eine Temperaturdifferenz in der Zelle hervorzurufen, um einen freien Konvektionsumlauf zu verursachen, ohne die Probe in einer Bahn mit Innenwänden aufgrund der Temperaturdifferenz zu rotieren,
   einen Detektor (9, 10), um eine Strahlungsemission von einer Probe nachzuweisen, und
   einen Prozessor (10), um in Echtzeit eine Probe in einer Zelle zu analysieren, wenn sie aufgrund der freien Konvektion, hervorgerufen durch die Temperaturdifferenz, umläuft, und um Analyseergebnisse zu erzeugen.

2. Analysegerät nach Anspruch 1, wobei die Zelle (2) und die Temperatursteuervorrichtung (10) für eine Nukleinsäurevervielfältigung konfiguriert sind.

3. Analysegerät nach Anspruch 1 oder 2, wobei das Gerät (1) ein Handgerät ist, umfassend eine Batteriestromversorgung.

4. Analysegerät nach einem der vorhergehenden Ansprüche, weiter umfassend eine Strahlungsquelle (7, 8) zur Beleuchtung einer Probe.

5. Analysegerät nach Anspruch 4, wobei die Strahlungsquelle eine LED (7) ist, wie z.B. eine blaue LED.

6. Analysegerät nach einem der Ansprüche 4 oder 5, wobei die Strahlungsquelle weiter einen Engpassfilter (8) oder einen Kerbfilter umfasst.

7. Analysegerät nach einem der vorhergehenden Ansprüche, wobei der Detektor einen Filter umfasst, um unerwünschte Wellenlängen zu blockieren.

8. Analysegerät nach einem der vorhergehenden Ansprüche, wobei die Temperatursteuervorrichtung eine Heizeinrichtung (3) umfasst, der mit einer Wand der Zelle in Kontakt steht, und eine Wärmesenke (4), die mit einer anderen Zellwand in Kontakt steht.

9. Analysegerät nach Anspruch 8, wobei die Wärmesenke (4) Größen- und thermische Konduktivitätseigenschaften aufweist, um passiv die assoziierte Zellwand auf einer Zieltemperatur zu halten.

10. Analysegerät nach einem der vorhergehenden Ansprüche, wobei der Prozessor (10) mit einer Rate misst, die gemäß der gewünschten Frequenz von Punkten auf einer S-Kurve gewählt sind, die die Änderung der Probeausgabe mit der Zeit darstellen.

11. Analysegerät nach Anspruch 10, wobei der Detektor eine CCD-Kamera (27) ist, und der Prozessor in die Kamera integriert ist.

12. Analysegerät nach Anspruch 11, wobei die Aufnahmerate im Bereich von 0,125 Hz bis 10 Hz liegt.

13. Analysegerät nach einem der vorhergehenden Ansprüche, wobei der Prozessor von der Zeitdomäne zur Umlaufdomäne nachbehandelt, um eine S-Kurve bereitzustellen, die eine Änderung der Probeemission mit thermischem Umlauf darstellt.

14. Analysegerät nach Anspruch 13, wobei die Nachbearbeitung durchschnittliche Fluideigenschaften, eine konstante Reaktionseffizienz und eine durchschnittliche Geschwindigkeit für effektive Weglängen in der Zelle annimmt.

15. Analysegerät nach Anspruch 13 oder 14, wobei die Nachbearbeitung die Durchführung einer Verdünnungsreihe mit geometrischer Progression umfasst, in der für eine bekannte Konzentrationsdifferenz und Reaktionseffizienz die Umlaufnummerdifferenz beim Überschreiten einer Schwelle bestimmt wird.

16. Analysegerät nach Anspruch 13 bis 15, wobei die Nachbearbeitung die Schätzung einer Zykluszeit wie Folgt umfasst:

$$\tau = \frac{Log(E+1)}{Slope}$$

wobei $\tau$ die Zykluszeit ist, E die Effizienz der Reaktion ist, Slope die Steigung des log-linearen Abschnitts der freien Konvektions-qPCR-Daten ist.

17. Analysegerät nach einem der Ansprüche 13 bis 15, umfassend eine Vielzahl von Zellen, eine gemeinsamen Heizeinrichtung zum Erwärmen einer Wand einer Vielzahl von Zellen, und eine gemeinsame Wärmesenke in Kontakt mit Wänden einer Vielzahl von Zellen.

18. Analysegerät nach einem der vorhergehenden Ansprüche, wobei der Detektor montiert ist, um eine Probeemission von einem Fenster zu erfassen, das nur einen Abschnitt des Zellraums umfasst.

19. Analysegerät nach Anspruch 18, wobei das Fenster einer kalten Seite der Zelle benachbart ist.

20. Verfahren zur Durchführung einer quantitativen Nukleinvervielfältigung, wobei das Verfahren die Schritte des Ladens einer Probe in eine Zelle (2) eines Geräts nach eines vorhergehenden Anspruchs, des Steuerns der Temperatursteuervorrichtung (3), um eine Nukleinvervielfältigung mit freier Konvektion in der Zelle hervorzurufen und des Messens von Emission der Probe an mehreren Punkten in Echtzeit mit einer Messrate umfasst.

21. Verfahren nach Anspruch 20, wobei der Prozessor (10) die Messung nachbearbeitet, um eine Ausgabe bereitzustellen, die eine Änderung der Probeemission mit thermischem Umlauf darstellt.

22. Verfahren nach einem der Ansprüche 20 bis 21, wobei eine hydrophobe Flüssigkeit über der Probe angeordnet wird, um die Verunreinigung der Probe zu verhindern.

23. Verfahren nach einem der Ansprüche 20 bis 22, wobei die Probe in einer Emulsion ist.

**24.** Verfahren nach einem der Ansprüche 20 bis 23, umfassend den Schritt des Erhöhens der Zelltemperatur auf eine kontrolliert Weise, des Überwachens der Emission der Probe, und das Verarbeitens von Daten, die von der überwachten Emission abgeleitet sind, um die Zeit zu bestimmen, mit der die DNA schmilzt und somit die Spezifizität der erweiterten Probe.

## Revendications

**1.** Appareil d'analyse (1) comprenant :

- une cellule (2) pour contenir un échantillon, la cellule (2) définissant un unique espace ouvert sans parois internes,
- un régulateur de température (3, 4, 10) pour réaliser un différentiel de température de part et d'autre de la cellule pour provoquer un cyclage à convection libre d'un échantillon sans rotation de l'échantillon dans une piste ayant des parois internes en raison du différentiel de température,
- un détecteur (9, 10) pour détecter une émission de rayonnement à partir d'un échantillon, et
- un processeur (10) pour analyser en temps réel un échantillon dans la cellule alors qu'il cycle en raison d'une convection libre provoquée par le différentiel de température, et pour générer des résultats d'analyse.

**2.** Appareil d'analyse selon la revendication 1, dans lequel la cellule (2) et le régulateur de température (10) sont configurés pour amplification d'acide nucléique.

**3.** Appareil d'analyse selon les revendications 1 ou 2, dans lequel l'appareil (1) est portatif, ayant une alimentation électrique à batterie.

**4.** Appareil d'analyse selon l'une quelconque des revendications précédentes, comprenant en outre une source de rayonnement (7, 8) pour éclairer un échantillon.

**5.** Appareil d'analyse selon la revendication 4, dans lequel la source de rayonnement est une DEL (7), telle qu'une DEL bleue.

**6.** Appareil d'analyse selon l'une des revendications 4 ou 5, dans lequel la source de rayonnement comprend en outre un filtre passe-bande étroit (8) ou un filtre coupe-bande.

**7.** Appareil d'analyse selon l'une quelconque des revendications précédentes, dans lequel le détecteur comprend un filtre pour bloquer des longueurs d'onde non souhaitées.

**8.** Appareil d'analyse selon l'une quelconque des revendications précédentes, dans lequel le régulateur de température comprend un élément chauffant (3) en contact avec une paroi de la cellule et un dissipateur thermique (4) en contact avec une autre paroi de cellule.

**9.** Appareil d'analyse selon la revendication 8, dans lequel le dissipateur thermique (4) a des caractéristiques de dimension et de conductivité thermique pour maintenir de manière passive la paroi de cellule associée à une température cible.

**10.** Appareil d'analyse selon l'une quelconque des revendications précédentes, dans lequel le processeur (10) échantillonne à un taux choisi selon une fréquence souhaitée de points sur une courbe en S représentant un changement d'émission d'échantillon au cours du temps.

**11.** Appareil d'analyse selon la revendication 10, dans lequel le détecteur est une caméra à dispositif de couplage de charge (27) et le processeur est incorporé dans la caméra.

**12.** Appareil d'analyse selon la revendication 11, dans lequel la fréquence de capture se situe dans la plage allant de 0,125 Hz à 10 Hz.

**13.** Appareil d'analyse selon l'une quelconque des revendications précédentes, dans lequel le processeur réalise un post-traitement du domaine temporel au domaine de cycle pour fournir une courbe en S représentant un changement d'émission d'échantillon au cours du cycle thermique.

**14.** Appareil d'analyse selon la revendication 13, dans lequel ledit post-traitement suppose des propriétés de fluide moyennes, un rendement de réaction constant et une vitesse moyenne pour des longueurs de trajets effectifs dans la cellule.

**15.** Appareil d'analyse selon l'une des revendications 13 ou 14, dans lequel le post-traitement comprend l'exécution d'une série de dilutions à progression géométrique, dans laquelle pour une différence de concentration et un rendement de réaction connus, la différence de nombre de cycles dépassant un seuil est déterminée.

**16.** Appareil d'analyse selon l'une quelconque des revendications 13 à 15, dans lequel le post-traitement comprend l'estimation d'un temps de cycle selon :

$$\tau = \frac{Log(E+1)}{Pente}$$

$\tau$ étant le temps de cycle, E étant le rendement de la réaction, Pente étant la pente de la partie log-linéaire des données qPCR de convection libre.

**17.** Appareil d'analyse selon l'une quelconque des revendications 13 à 15, comprenant une pluralité de cellules, un élément chauffant commun pour chauffer une paroi d'une pluralité de cellules et un dissipateur thermique commun en contact avec des parois d'une pluralité de cellules.

**18.** Appareil d'analyse selon l'une quelconque des revendications précédentes, dans lequel le détecteur est monté pour capturer une émission d'échantillon à partir d'une fenêtre comprenant uniquement une partie de l'espace de cellule.

**19.** Appareil d'analyse selon la revendication 18, dans lequel ladite fenêtre est adjacente à un côté froid de la cellule.

**20.** Procédé de réalisation d'une amplification nucléique quantitative, le procédé comprenant les étapes de chargement d'un échantillon dans une cellule (2) d'un appareil selon l'une quelconque des revendications précédentes, de commande du régulateur de température (3) pour réaliser une amplification nucléique avec une convection libre dans la cellule, et d'échantillonnage de l'émission de l'échantillon à de multiples points en temps réel à un taux d'échantillonnage.

**21.** Procédé selon la revendication 20, dans lequel le processeur (10) réalise un post-traitement de la lecture pour fournir une sortie indiquant un changement d'émission d'échantillon au cours du cycle thermique.

**22.** Procédé selon l'une des revendications 20 à 21, dans lequel un liquide hydrophobe est placé sur l'échantillon pour empêcher une contamination de l'échantillon.

**23.** Procédé selon l'une quelconque des revendications 20 à 22, dans lequel l'échantillon est dans une émulsion.

**24.** Procédé selon l'une quelconque des revendications 20 à 23, comprenant l'étape d'augmentation de la température de cellule d'une manière commandée, de surveillance de l'émission de l'échantillon et de traitement de données issues de l'émission surveillée pour déterminer le temps auquel l'ADN fond, et ainsi une spécificité de l'échantillon amplifié.

Fig.1

Fig.2

EP 2 069 070 B1

Fig.3

Fig.4

Fig.5

EP 2 069 070 B1

Fig.6

19

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6586233 B
- US 20060216725 A, Lee
- US 5994056 A

### Non-patent literature cited in the description

- **BRAUN, D. ; GODDARD, N. ; LIBCHABER, A.** Exponential DNA replication by laminar convection. *Physical Review Letters,* 2003, vol. 91, 1-4
- **HENNIG. M. ; BRAUN, D.** Convective polymerase chain reaction around micro immersion heater. *Applied Physics Letters,* 2005, 87
- **UGAZ, V. ; KRISHNAN, M.** Novel convective flow based approach for high-throughput per thermocycling. *JALA,* October 2004, vol. 9 (5
- **WHEELER, E. ; BENETT, W. ; STRATTON, P. ; RICHARDS, J. ; CHEN, A. ; CHRISTIAN, A. ; NESS, K. ; L.G. LI ; J. O. ; WEISGRABER, T.** Convectively driven polymerase chain reaction thermal cycler. *Analytical Chemistry,* 2004, vol. 76, 4001-4016
- **YAGER, P. ; EDWARDS, T. ; FUN E. ; HELTON, K. ; NELSON, K. ; TAM, M. ; WEIGL. B.** Microfluidic diagnostic technologies for global public health. *Nature,* 27 July 2006, vol. 442, 412-418